# EUROPEAN PATENT SPECIFICATION

(11) **EP 3 108 169 B1**
(45) Date of publication and mention of the grant of the patent: **07.10.2020**
(21) Application number: 15707238.0
(22) Date of filing: 20.02.2015
(51) Int. Cl.: F16K 47/02, F16K 1/22, F16K 17/04, F16K 17/02, F16K 17/40

(54) **ROTATABLE PRESSURE RELIEF VALVE ASSEMBLY**
DREHBARE DRUCKENTLASTUNGSVENTILANORDNUNG
ENSEMBLE SOUPAPE DE DÉTENTE DE PRESSION ROTATIF

(30) Priority: 21.02.2014 US 201461966335 P
(43) Date of publication of application: 28.12.2016
(73) Proprietor: BS&B Innovation Limited, Limerick (IE)
(72) Inventor: BRAZIER, Geoffrey, Woodbury, MN 55125 (US); TOMASKO, John, Ballingarry Co., Limerick (IE)
(74) Representative: Finnegan Europe LLP
(86) International application number: PCT/US2015/016904
(87) International publication number: WO 2015/127268

(56) References cited:
- JP-Y- H0 452 540
- US-A- 5 607 140
- US-B1- 6 367 498

## Description

### Field

The present disclosure relates to a rotatable valve assembly for relieving pressure from a pressurized system. More particularly, the disclosure relates to a rotatable valve assembly, or an associated component of a rotatable valve assembly, with improved flow characteristics.

### Background

There are many types of systems that process or use a pressurized fluid. To ensure the safety of these types of systems, each such system typically includes a safety device designed to prevent the over-pressurization of the system. In an emergency situation, where the fluid in the system reaches an unsafe level or pressure, the high pressure of the fluid acts on the safety device to create an opening to release fluid from the system. Venting fluid to the environment or a safety reservoir through the opening reduces the pressure in the system and prevents another portion of the system from failing due to the high pressure of the fluid.

One type of safety device for a pressurized system is a pressure relief valve, which may be a reclosing valve or a non-reclosing valve. Typically, a spring, a pin, or a combination of a spring and pin, is used to hold a moving plug or disc in sealing engagement with the body or housing of the device while connected to the pressurized system. When the pressure of the fluid reaches the predetermined safety level in such systems, the force exerted on the plug by the pressurized fluid overcomes the bias of the spring or exceeds the resistance of the pin that holds the plug in place. When either of these events occurs, the pressurized fluid moves the plug to expose an opening through which fluid may escape to relieve the pressure in the system.

One type of pressure relief valve is a rotatable valve assembly. Known rotatable valve assemblies are disclosed in commonly owned U.S. Patent Nos. 5,607,140, 5,947,445, 5,984,269, 6,098,495, 6,367,498, 6,488,044, and 6,491,055. A rotatable valve includes a plug that is mounted on a rotatable shaft and may be rotated between a closed position where the plug blocks the flow of fluid and an open position where the plug allows fluid to flow through the valve. In the closed position, the plug face is oriented toward the pressurized system. While in the open position, the plug face is oriented substantially parallel to the flow of the fluid being relieved. The rotation of the plug to the open position may be initiated manually or by another external force. Alternatively, the plug may be mounted on the shaft so that the rotational axis of the plug is offset relative to the center of the plug, so that the pressurized fluid exerts a torque on the shaft and urges the plug to rotate. A device may be coupled to the shaft to prevent the shaft from rotating until the torque on the shaft reaches a certain level, indicating that the pressure of the fluid has reached an over-pressure situation. At that point, the shaft is released and the plug rotates to open the valve and vent the system.

When the rotatable valve assembly opens, it may be desirable to maximize the rate of fluid flow through the open valve. Factors impacting flow rate include flow area and flow turbulence.

Typically, the flow area is maximized when the valve plug face is substantially parallel to the direction of fluid flow-i.e., when the plug is in a "fully open" orientation. In some cases, however, the plug may open with a high rotational velocity that may cause the plug to rotate beyond a fully open orientation (thereby partially closing off the fluid flow path) and/or cause the plug to oscillate or "bounce" between fully-open and partially-closed orientation as the relieved fluid escapes from the system. In such a case, the flow path of a relieved fluid may be obstructed, thereby diminishing the flow rate or adding undesirable agitation to the fluid flow, which may lead to damage to moving parts of the valve itself. Accordingly, there is a need for a valve plug assembly including one or more features to hold the valve plug in an open position, absorb rotational energy of an opening valve plug, and/or reduce the capacity of the valve plug to oscillate between fully-open and partially-closed orientations.

Even when a typical valve plug is in a substantially open position, turbulence in the flow of a relieved fluid may diminish the valve's performance. Typically, an open valve plug exhibits an angular shape or abrupt contours, which may tend to increase flow turbulence, potentially leading to damage to valve flow capacity and valve construction. Accordingly, there is a need for a valve plug shaped to reduce the turbulence of an escaping fluid.

Many rotatable valve assemblies are used in applications where a great deal of heat, including radiant heat from processes, is generated in the environment. High temperatures may adversely affect the performance of a rotatable valve assembly. For example, high temperatures may cause valve components to warp and negatively impact the valve's operation. High temperatures may, for example, distort the shape of the valve plug or valve body relative to the valve's rotational shaft in a manner that may interfere with the valve's ability to open. As another example, high temperatures may impact the performance of valve plug seals, valve plug lubricants, release mechanisms (e.g., pins) or other components that the valve relies on to ensure optimal performance. Typically, heat shielding is used only to protect controls and similar components from heat. There is a need for a mechanism to protect a rotatable valve assembly (or components thereof) from environmental heat as well.

In a rotatable valve plug provided with a rotational axis offset from the center of the plug, the mass of the valve plug is unevenly divided across the rotational axis. That imbalance may impact the valve plug's ability to rotate, and may impact the pressure level at which the valve plug may open. In addition, such imbalance may amplify the oscillation of the valve in the flow path, which may reduce flow capacity and may damage the valve components. There is a need for an offset-type valve plug that is designed to be weight-balanced or gravity-neutral relative to the rotational axis. Such a plug may provide more predictable valve performance, because the number of factors impacting opening pressure and flowing position of the valve may be reduced.

As noted above, a device (e.g., a release mechanism) may be provided to prevent a rotatable valve plug assembly from opening until a predetermined pressure differential is reached. Such a release mechanism may include, for example, a deformable or frangible failure mechanism, such as a buckling pin, designed to deform or break in response to a predetermined load. Known valves rely on the pressure differential across the valve to generate all of the opening torque. This requires that the torque required to close the valve be kept sufficiently small so as not to influence the torque required to open the valve. It may be desirable to pre-load a release mechanism to add to the opening torque. Such preloading may reduce the impact of plug inertia, static friction (e.g., in valve seals and mechanical linkages), and closing torques on the speed at which a valve plug may open. It may further be desirable to pre-load release mechanisms other than buckling pins, such as shear pins or pins or plates designed to fail in tension.

This disclosure may overcome one or more of the deficiencies above, may provide one or more of the desired advantages above, may overcome other deficiencies in the art, and/or may provide additional benefits.

### SUMMARY

To overcome one or more of the deficiencies above, provide one or more of the desired advantages above, or to overcome other deficiencies and/or provide other benefits, as embodied and described herein, the disclosure is directed to a rotatable pressure relief valve assembly as defined in the claims, comprising a valve body and a plug mounted within the body, the plug being rotatable between an open position and a closed position about a rotatable shaft. The rotatable pressure relieve valve assembly comprises a release mechanism configured to engage with the shaft and hold the plug in the closed position until an opening pressure of the valve assembly is reached, and a damper configured to absorb a rotational kinetic energy imparted by the shaft when the valve plug rotates into the open position. The release mechanism comprises a failure member. The assembly further comprises a pre-loading mechanism configured to pre-load the failure member, and is characterized in that the rotatable shaft comprises a contact arm configured to engage with the failure member, and to transmit a torque from the shaft to the failure member; and wherein the damper is configured to absorb the rotational kinetic energy by engaging with the contact arm.

### BRIEF DESCRIPTION OF THE DRAWINGS

The accompanying drawings, which are incorporated in and constitute a part of this specification, illustrate several embodiments and together with the description, serve to explain the principles of the disclosure.
FIG. 1 illustrates a view of the inlet side of a rotatable valve assembly.
FIG. 2 illustrates a cross-sectional view of the rotatable valve assembly illustrated in FIG. 1 taken along line A-A.
FIGS. 3A and 3B illustrate a side view of the release mechanism assembly of the rotatable valve assembly illustrated in FIG. 1.
FIG. 4 illustrates a rotatable valve assembly release mechanism including a latch and a spring energy absorber.
FIG. 5 illustrates a rotatable valve assembly release mechanism including a latch and a bellows energy absorber.
FIG. 6 illustrates a rotatable valve assembly release mechanism including a torsion spring configured to add an opening torque to the valve plug.
FIG. 7 illustrates a rotatable valve assembly release mechanism including a magnet configured to hold the plug in a fully-open orientation when the valve opens.
FIGS. 8A and 8B illustrate a side view of an energy absorbing mechanism for a rotatable valve plug assembly, wherein the energy absorbing mechanism is provided on the side opposite from the release mechanism. FIGS. 8A and 8B do not fall within the scope of the claims, but are nonetheless included for illustrative purposes to aid the reader's understanding.
FIGS. 9A and 9B illustrate a side view of a latching mechanism for a rotatable valve plug assembly, wherein the latching mechanism is provided on the side opposite from the release mechanism.
FIGS. 10A and 10B illustrate a cross-sectional view of a rotatable valve assembly including a wing-shaped valve plug.
FIG. 11A illustrates a rotatable valve assembly including a thermal shield attached to the valve assemly.
FIG. 11B illustrates a rotatable valve assembly including a thermal shield positioned between the valve assembly and a heat source.
FIG. 12 illustrates a rotatable valve plug including a cavity.
FIG. 13 illustrates a rotatable valve plug including a counterweight.
FIG. 14 illustrates a release mechanism for a rotatable valve assembly using a buckling pin.
FIG. 15 illustrates a release mechanism for a rotatable valve assembly using a tensile failure member.
FIG. 16 illustrates a partial view of the inlet side of a rotatable valve assembly with a shear pin.
FIG. 17 illustrates a side view of the rotatable valve assembly of FIG. 16.
FIG. 18 illustrates a detail view of a shear pin failure member installed as in the rotatable assembly illustrated in FIG. 16.
FIG. 19 illustrates a buckling pin engaged directly with a valve shaft of a of a rotatable valve assembly. Fig. 19 does not fall within the scope of the claims, but is nonetheless included for illustrative purposes to aid the reader's understanding.
FIG. 20 illustrates a tensile failure member engaged directly with a valve shaft of a rotatable valve assembly. Fig. 20 does not fall within the scope of the claims, but is nonetheless included for illustrative purposes to aid the reader's understanding.
FIG. 21 illustrates a notched shaft for use with a rotatable valve assembly.
FIGS. 22A-22B illustrate a latch for use with the notched shaft of FIG. 21.
FIGS. 23A-23B illustrate a housing a projection for use with the notched shaft of FIG. 21.
FIG. 24 illustrates a shaft having a toothed end.

### DESCRIPTION OF THE EMBODIMENTS

Reference will now be made in detail to the present exemplary embodiments, examples of which are illustrated in the accompanying drawings. Wherever possible, the same reference numbers will be used throughout the drawings to refer to the same or like parts. The drawing figures of this application are intended to provide a general understanding of the working elements of the underlying system. Accordingly, unless explicitly stated, the figures do not represent a literal depiction of proportional dimensions or the precise locations for the illustrated inter-related components.

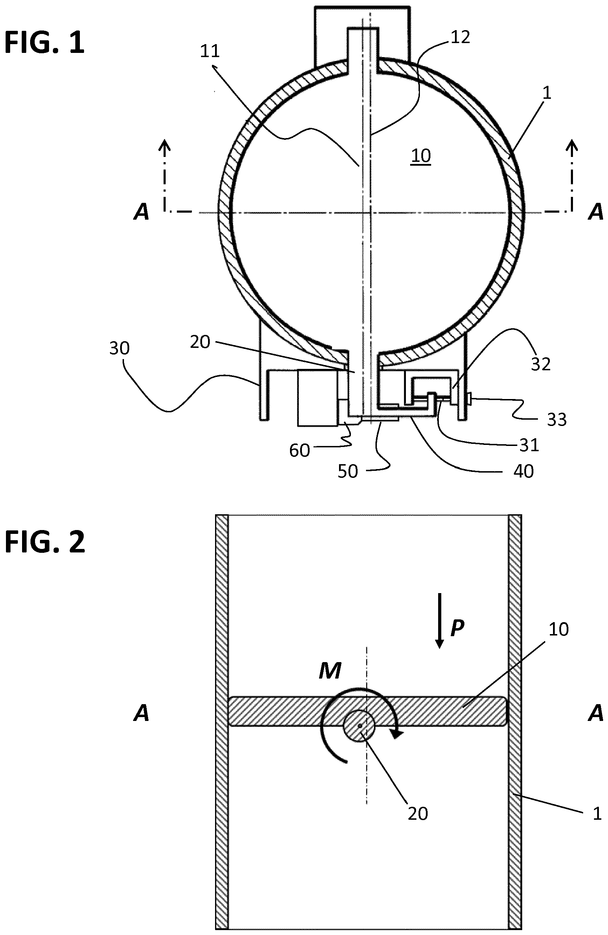

FIG. 1 illustrates one embodiment of a rotatable valve assembly of the present disclosure. The assembly includes a valve body 1 and a valve plug 10. The valve plug 10 is mounted in the valve body 1 through a shaft 20 defining a rotational axis 11. The body has an inlet and an outlet defining a fluid passageway through the body. The inlet of the body receives fluid and pressure P from a fluid pressure source (not illustrated), such as a vessel or piping.

The shaft 20 may extend through the body 1 and may be rotatable with the plug 10, relative to the body 1, about the rotational axis 11. The shaft 20 may be a single, continuous shaft extending across a face of or through the plug 10, or may be one or more shaft ends, axles, ears, or the like which extend from the plug through the body. A single continuous shaft may be desirable to increase rigidity and keep the shaft in alignment with the rotational axis. Limit switches, motion detection switches, or the like (not shown) may be provided at either or both outside ends of the shaft 20 to indicate whether the plug 10 is in the open or closed position and/or has been opened or closed.

As illustrated in FIG. 1, the valve plug 10 may be mounted for eccentric rotation in the passageway. The rotational axis 11 of the shaft 20 and plug 10 is offset from the diameter 12 of the plug 10. As a result, the first portion of the plug 10 on the first side of the rotational axis 11 is larger and has greater area exposed to the inlet fluid pressure P than the second portion of the plug on the second side of the rotational axis 11. This creates a moment M and torque about the rotational axis 11 and shaft 20. This arrangement has another advantage in that the shaft 20 partially balances the fluid pressure P on either side of the rotational axis 11 and shaft 20 and therefore reduces the pressure which the plug 10 must directly resist to seal.

When valve plug 10 is in a closed position, a pressure (P) in the pressurized system generates a torque and moment (M) (as shown in FIG. 2) on the valve plug 10 about rotational axis 11. As illustrated in FIG. 1, the assembly includes a release mechanism 30 configured to prevent the valve plug 10 from rotating from the closed position when the torque about rotational axis 11 is below a selected magnitude and for releasing the plug 10 and shaft 20 to rotate to an open position when the torque exerted around the rotational axis 11 exceeds a selected magnitude.

In one embodiment, a release mechanism 30 assembly is mounted on the valve body 1, as illustrated in FIGS. 1 and 2. The release mechanism 30 may include a failure pin 31. As illustrated in FIG. 1, the failure pin 31 may be mounted in the release mechanism 30 assembly via a pin mount 32. The release mechanism 30 also includes a contact arm 40, which translates the torque around the rotational axis 11 into a load applied to the failure pin 31. The failure pin 31 is configured to deform and/or fail under a predetermined load applied by the contact arm 40. The failure pin 31 may be a permanently or irreversibly deformable structure, which bends or breaks when subjected to a predetermined load. Although a failure pin 31 is illustrated, the disclosure contemplates the use of any suitable mechanism configured to deform and/or fail under a predetermined load, including but not limited to, a beam, bar, plate, disk, spring, or comparable structure (or any combination thereof). Such mechanisms may be permanently or irreversibly deformable. Alternatively, such mechanisms may be reversibly deformable, such that they return to an initial condition once a deforming load is removed. A failure pin 31 (or other suitable mechanism) may be provided with features to facilitate failure or to establish a particular failure point, such as surface scoring or areas of reduced diameter.

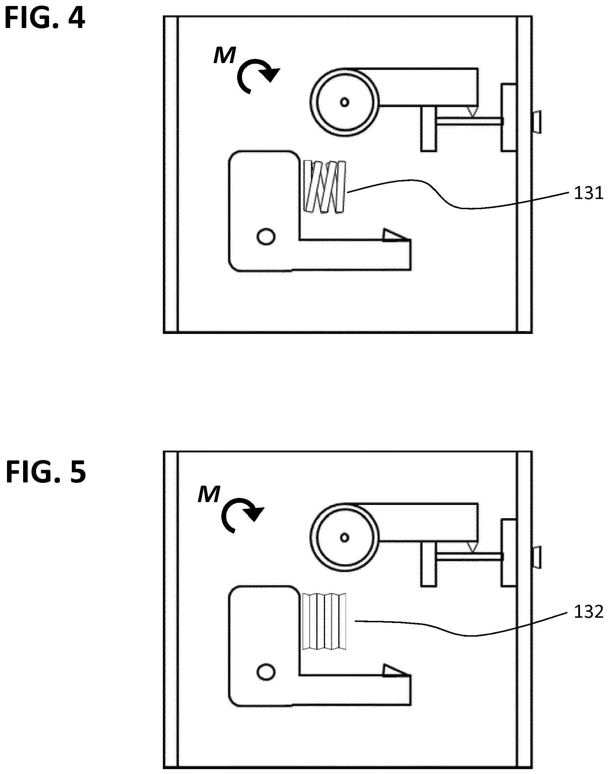

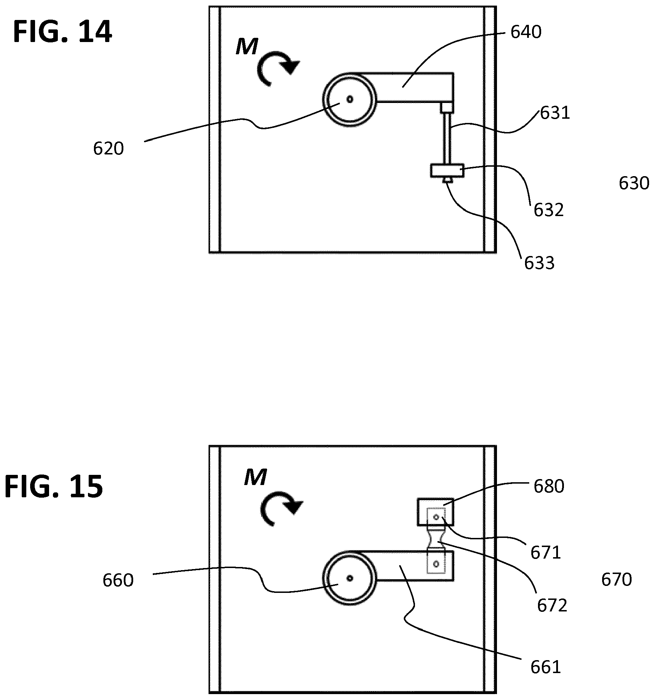

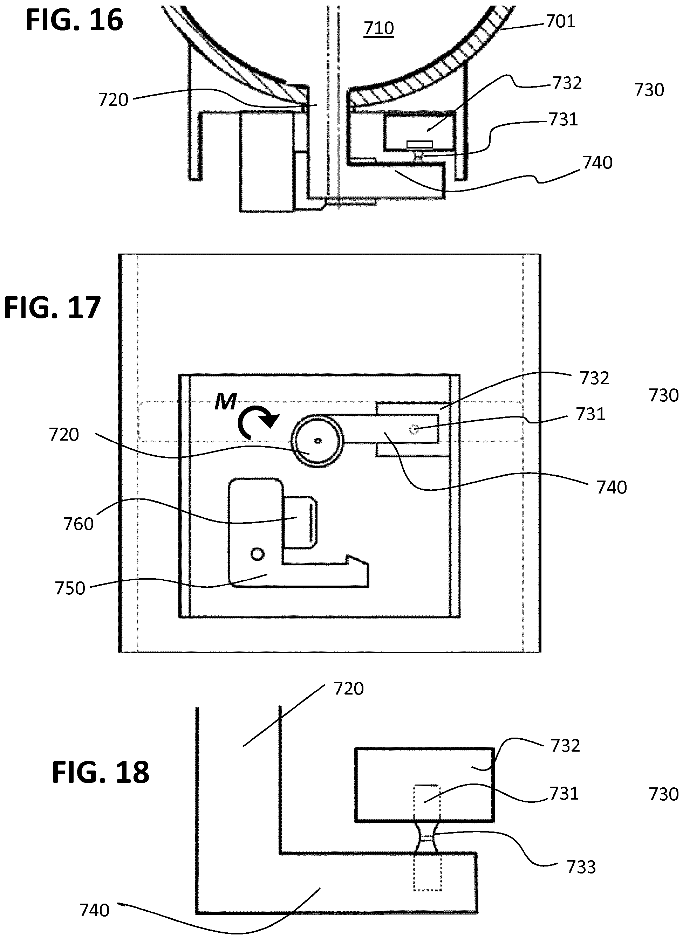

As illustrated in FIG. 1, the failure pin 31 is subjected to a bending-type load applied by the contact arm 40. It is also contemplated that the failure pin 31 (or other suitable failure mechanism) may be subject to a different type of loading, such as compression, tension, or shear, as illustrated in FIGS. 4-6 of U.S. Patent No. 5,947,445. For example, a compression-type buckling pin 631 release mechanism is illustrated in FIG. 14. A release mechanism using a tensile failure member 671 is illustrated in FIG. 15. As illustrated in FIG. 15, the tensile failure member 671 is attached to one end of the contact arm 661 and to a tensile failure member mount 680. A tensile failure member 671 may be, e.g., a rod or a flat plate configured to fail when subjected to a predetermined tension. A tensile failure member 671 may include a narrow region 672, such as illustrated in FIG. 15, configured to set the tension at which the failure member 671 will fail. As another example, FIGS. 16-18 illustrate an embodiment of a rotatable valve assembly using a shear pin 731. As illustrated in FIGS. 16 and 18, a rotational shaft 720 extends from a valve plug 710, and an arm 740 extends from the shaft 720. A shear pin 731 is positioned between the arm 740 and a pin mount 732, preventing the arm 740 (and shaft 720) from rotating. As illustrated in FIG. 16, the shear pin 731 may be provided with a narrowed weakened region, to facilitate shear and set the value of shear at which the shear pin 731 may fail.

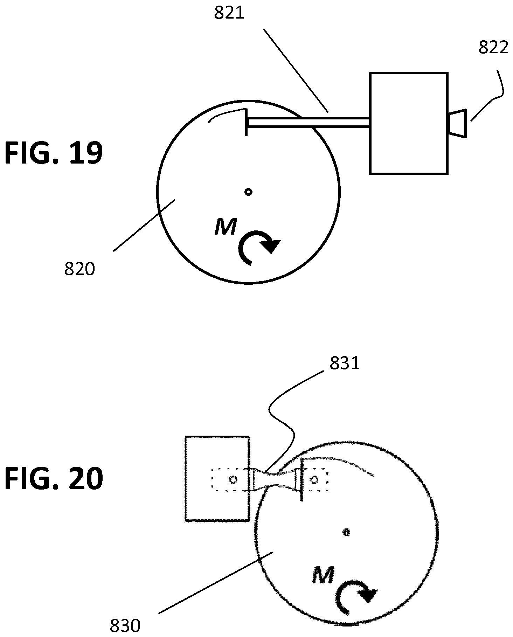

FIG. 1 and FIGS. 14-18 illustrate a contact arm 40, 640, 661, 740 extending from the shaft 20, 620, 660, 720 to engage a failure mechanism. In one embodiment, not forming part of the claimed invention, a failure mechanism may be engaged directly with the rotating shaft. For example, a pin may be inserted through the shaft and engaged with the valve body, subjecting the pin to a shear load, as illustrated in FIG. 1 of co-owned U.S. Patent No. 5,984,269. As another example, not forming part of the claimed invention, and illustrated in FIG. 19, a compression-type buckling pin 821 may engage directly with a portion of the valve shaft 820, so that the buckling pin 821 will oppose rotation of the valve shaft 820. When the buckling pin 821 of FIG. 19 is subject to a predetermined load, it may fail and allow the shaft 820 to rotate. As illustrated in FIG. 19, a pin screw 822 may be provided to pre-load the buckling pin 821. In another embodiment, a buckling pin may be preloaded using another preloading mechanism, such as a spring, or may be preloaded within a pin cartridge. As yet another example, not forming part of the claimed invention, and illustrated in FIG. 20, a tensile failure member 831 (e.g., a tensile rod, or a tensile plate) may engage directly with a portion of the valve shaft 830, so that the tensile failure member 831 will oppose rotation of the valve shaft 830. When the tensile failure member 831 is subject to a predetermined load, it may fail in tension and allow the shaft 830 to rotate.

FIG. 1 illustrates a pin screw 33 that may be used to pre-load the failure pin 31. FIG. 14 illustrates another embodiment of a pin screw 633, which may be used to pre-load a compression-type buckling pin 631. Pre-loading a failure member also may be achieved using a clamp, spring, or any other suitable pre-loading mechanism. Pre-loading may increase the predictability of the valve plug's performance. Pre-loading may add to the opening torque, which may help the valve open more quickly. Pre-loading may, for example, be used to overcome static friction in valve seals and mechanical linkages, and reduce the impact of those factors on the opening pressure of the valve.

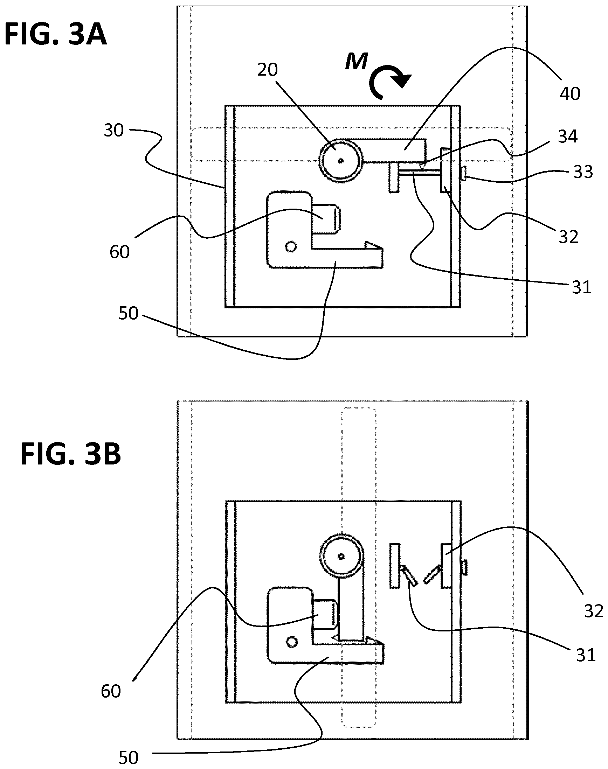

FIGS. 3A and 3B illustrate a side view of the release mechanism assembly 30 of the rotatable valve assembly of FIG. 1. As illustrated, the contact arm 40 includes a pin contact element 34 placed into contact with the failure pin 31. The release mechanism assembly 30 includes a latch 50 and a bumper 60. The bumper 60 is configured to absorb rotational energy of the plug (via the contact arm 40) when the valve plug opens after the failure pin 31 breaks (as shown in FIG. 3B). The latch 50 is configured to hold the plug in a fully-open position when the valve has opened. Although a latch 50 and a bumper 60 are illustrated together in FIGS. 3B, it is contemplated that a latch 50 may be provided without a bumper 60 or other energy-absorbing mechanism. It also is contemplated that a bumper 60 or other energy-absorbing mechanism may be provided without the use of a latch 50.

Although a bumper 60 is illustrated in FIGS. 3A and 3B, it is contemplated that any suitable damper or energy-absorbing mechanism may be used to absorb the rotational energy of an opening valve plug. For example, in FIG. 4, a spring 131 is provided. As another example, in FIG. 5, a collapsible bellows 132 is provided. A suitable energy-absorbing mechanism may be configured to deform (reversibly or irreversibly). Other examples of suitable energy absorbing mechanisms may include Belleville washers, Belleville springs, hydraulic pistons, or pads. The energy absorbing mechanism may be provided as part of a module or cartridge that may be replaceable.

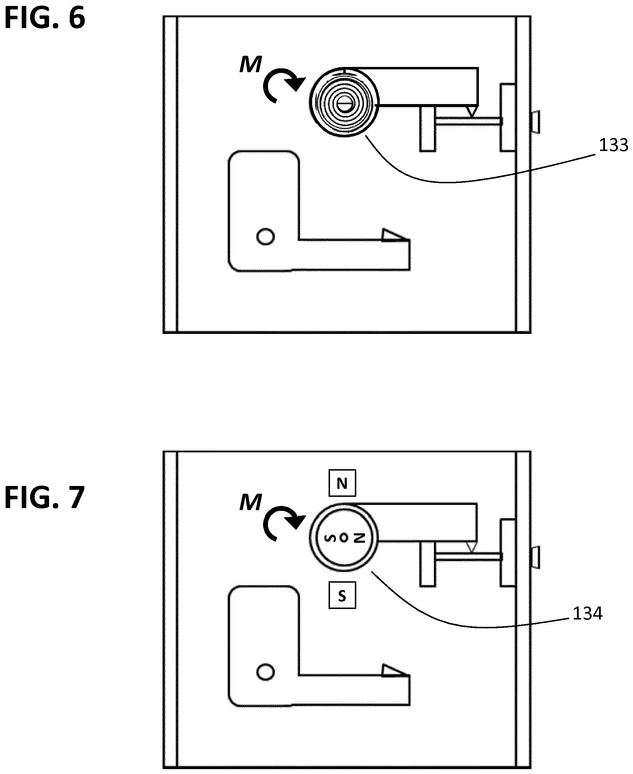

Although a latch 50 is illustrated in FIGS. 3A and 3B, it is contemplated that any suitable catching mechanism may be used (in addition to or as an alternative to a latch) to hold a valve plug in an open position after opening. For example, in FIG. 6, a torsion spring 133 is provided. The torsion spring 133 in FIG. 6 is configured to apply an opening torque on the valve plug. As another example, in FIG. 7, a magnet 134 is provided to exert a magnetic force tending to hold the valve plug in an open position after opening. Other examples of suitable mechanisms to hold a valve plug in an open position may include clips, hook-and-loop closures, or adhesives.

The torsion spring 133 illustrated in FIG. 6 also may pre-load a force on the failure pin. Pre-loading may add to the opening torque, which may help the valve open more quickly. Pre-loading may, for example, be used to overcome static friction in valve seals and mechanical linkages, and reduce the impact of those factors on the opening pressure of the valve.

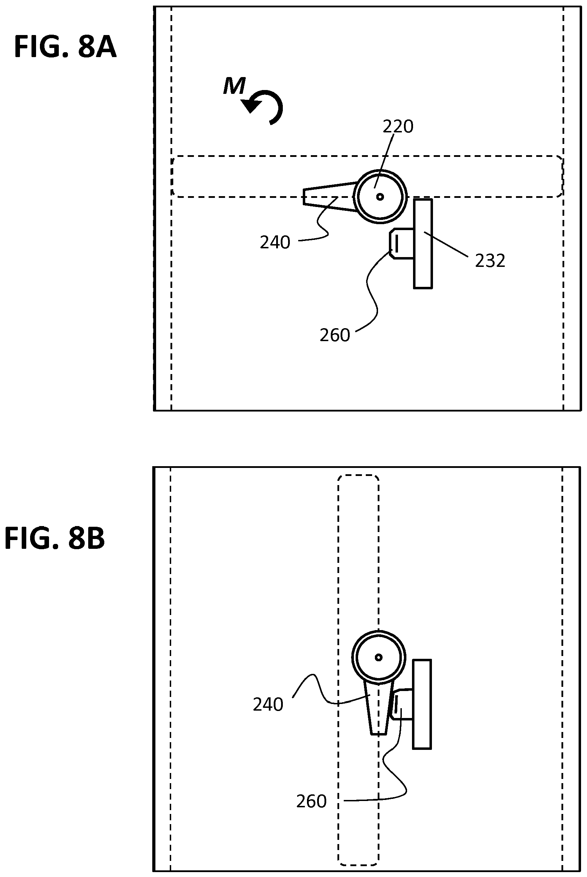

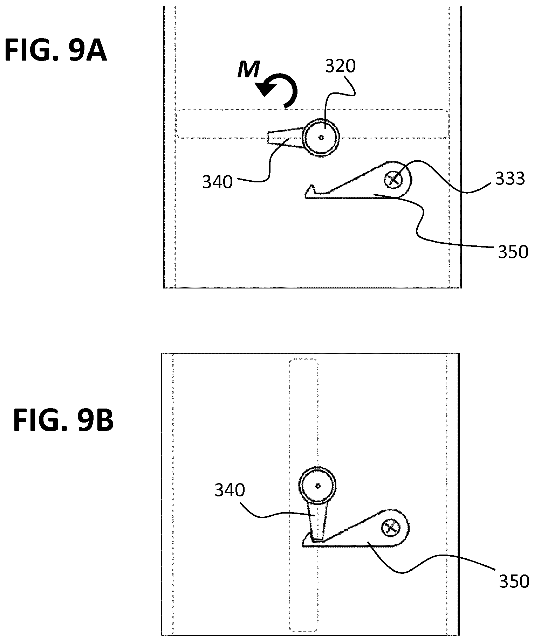

The energy-absorbing and latch features illustrated, for example, in FIGS. 1-3B are positioned on the same side of the valve body as the release mechanism. In alternative embodiments which do not fall within the scope of the claims but which are nonetheless provided for illustrative purposes, and as shown in exemplary FIGS. 8A and 8B, an energy absorber 260 may be mounted 232 on the opposite side of the valve body from the release mechanism. As shown in FIG. 8A, the valve shaft 220 may be provided with an arm 240, which is brought into contact with the energy absorber 260 when the valve plug opens (FIG. 8B). As another example, as shown in FIGS. 9A and 9B, a latch 350 may be mounted on the opposite side of the valve body from the release mechanism. The latch 350 may be configured to catch an arm 340 extending from the valve plug shaft 320 when the valve plug opens (FIG. 9B). The latch 350 illustrated in FIGS. 9A and 9B is provided with a latch screw 333 that may be used to tighten or loosen the latch 350, thereby increasing or decreasing the force that must be applied to activate the latch 350. It is contemplated that increasing the force that must be applied to activate the latch 350 may allow the latch 350 to absorb rotational energy from the opening valve plug.

FIGS. 8A, 8B, 9A, and 9B illustrate an arm 240, 340 extending from the valve shaft 220, 320 to engage with an energy absorber 260 and/or catching mechanism 350. According to an example not forming part of the claimed invention, it is contemplated, however, that an arm need not be used. For example, the shaft may engage directly with an energy absorber, a catching mechanism, a mechanism to slow or stop the shaft's rotation, or other aspect(s) of the present disclosure.

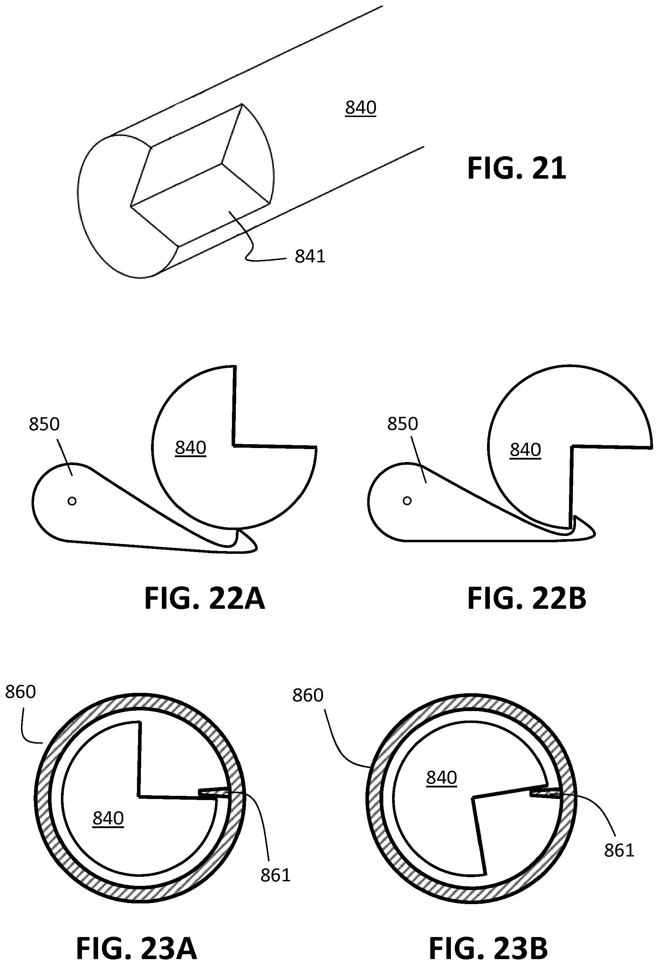

In one embodiment, the shaft may include a notch or other geometry configured to operate with another mechanism to limit the shafts rotation relative to the valve body. For example, as illustrated in FIG. 21, the shaft 840 may include a notch 841. In a rotational valve assembly, the notched shaft of FIG. 21 may be used in conjunction with a catching mechanism, such as the latch 850 illustrated in FIGS. 22A and 22B. As shown in FIG. 22A, the shaft 840 is in a closed-valve position, and the latch 850 is disengaged. As shown in FIG. 22B, the shaft 840 has rotated clockwise 90 degrees into an open position, allowing the latch 850 to engage with the notch 841 in the shaft 840 and prevent the shaft 840 from rotating back toward a valve-closed position.

In another embodiment, the notched end of a shaft 840 may fit within a shaft housing 860 (illustrated in FIGS. 23A and 23B) that may extend from or otherwise be attached to the valve body. The shaft housing 860 may include a projection 861 or other feature configured to stop the shaft 840 from rotating beyond a set position (e.g., a position corresponding to the substantially open position of the valve plug). By way of illustration, FIG. 23A illustrates the notched shaft 840 of FIG. 21 in a valve-closed position, and FIG. 23B illustrates the notched shaft 840 of FIG. 21 in a valve-open position, wherein the projection 861 of the shaft housing 860 has prevented the shaft 840 from further rotation. The projection 861 of the shaft housing 860 may be configured to absorb a rotational energy from the shaft 840 and/or may include features to catch the shaft 840 to prevent it from further rotation.

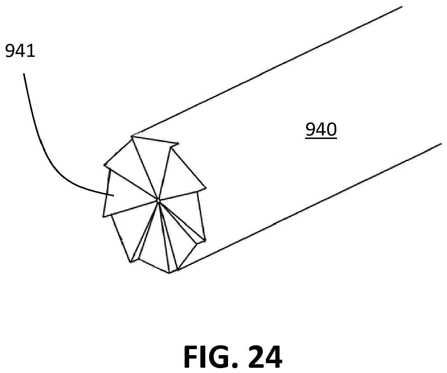

It is also contemplated that a shaft may be configured to cooperate with a catching mechanism that may include a clutch mechanism or a ratcheting mechanism. As illustrated in FIG. 24, for example, a shaft 940 may include a toothed end 941. When paired with a ratchet or clutch (not shown), the shaft 940 illustrated in FIG. 24 may be allowed to rotate in only one direction. As a result, the shaft 940 may be prevented from returning a valve plug to a closed position after opening

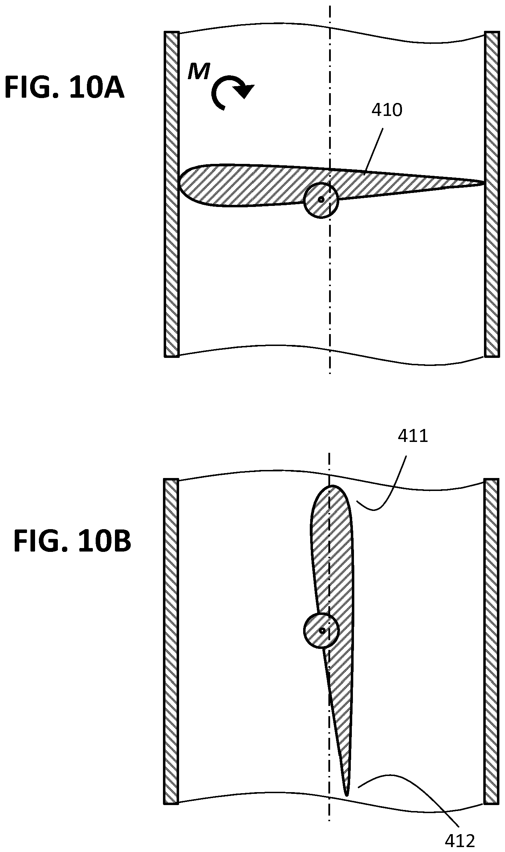

The valve plug of a rotatable valve assembly may be shaped to improve fluid flow characteristics upon opening of the valve. As illustrated in FIGS. 10A and 10B, for example, a valve plug 410 may be provided with a wing-shaped or rudder-shaped cross-section. The illustrated valve plug 410 includes a smoothly curved leading edge 411, and tapers toward the tailing edge 412. When the wing-shaped or rudder-shaped valve plug 410 is in the open position (FIG. 10B), fluid may flow around the valve plug more smoothly than it would around a typical valve plug (which typically presents an abrupt profile to the fluid flow and lacks a tapering feature). As compared to a known valve plug, the resulting smooth flow may reduce turbulence and/or increase the rate at which an escaping fluid may flow. In addition, the fluid flow around a wing-shaped or rudder-shaped valve plug may add to the rotational force to open the valve more quickly. Also, the fluid flow around a wing-shaped or rudder-shaped valve plug may hold the valve plug in an open position, slow down rotation of the plug as the fully-open orientation is approached, and/or prevent the plug from oscillating between open and closed positions. Accordingly, the present disclosure contemplates that modifying the valve plug profile may eliminate the need for (or add to the effectiveness of) a latching mechanism or energy-absorbing mechanism such as those illustrated in FIGS. 1-3. In other words, a wing-shaped or rudder-shaped valve plug may be used with or without a latch and/or an energy-absorbing mechanism.

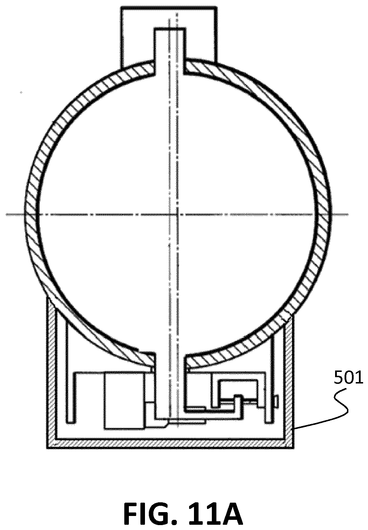

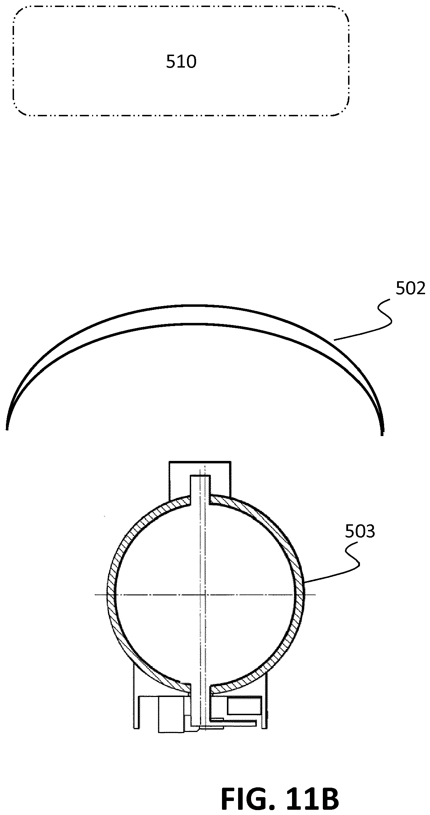

A rotatable valve assembly may include components that are susceptible to warping or damage from environmental heat. Accordingly, a thermal shield may be used to protect the rotatable valve assembly or its components from environmental heat. As illustrated in FIG. 11A, for example, the release mechanism assembly of a rotatable valve assembly may be surrounded with a thermal shield 501. In addition or alternatively, a thermal shield may be provided around part or all of the valve body. In one embodiment, a thermal shield may be attached to the valve body. In another embodiment, illustrated in FIG. 11B, a thermal shield 502 may be positioned proximate to the valve body between the valve body 503 and a heat source 510. The thermal shield 502 in FIG. 11B may be, for example, a reflective sail to reflect away radiant heat. Any other mechanism suitable to reflect, insulate, or otherwise protect a valve from a heat source also is contemplated. A thermal shield may be particularly desirable to prevent non-symmetrical heating of a valve, because non-symmetrical heating may generate distortion in the body-shaft relationship that may interfere with valve operation.

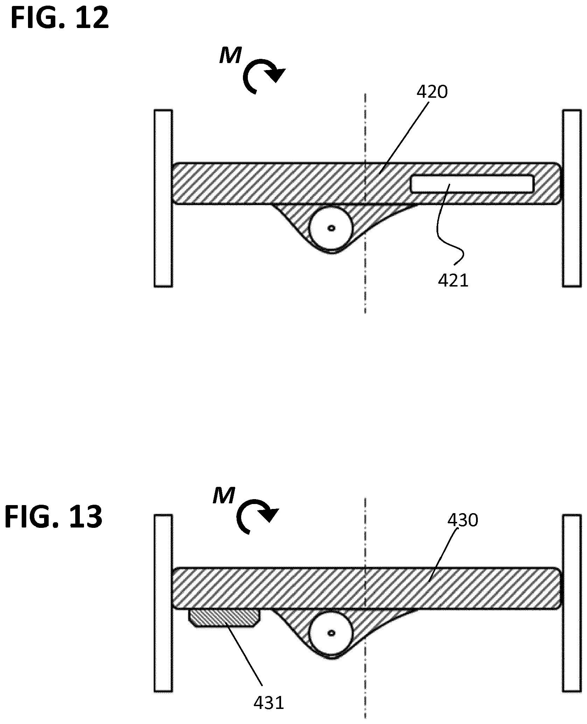

As a result of the offset shaft design used with a known rotatable valve plug, the mass of a known plug may be unevenly distributed across the rotatable shaft. The present disclosure contemplates a providing a weight-balanced or gravity-neutral plug with an offset shaft. For example, as illustrated in FIG. 12, a portion of the valve plug 420 may include a cavity 421 to reduce the mass on one side of the shaft. As another example, shown in FIG. 13, the valve plug 430 may be provided with a counterweight 431 to add to the mass on one side of the shaft. It is also contemplated that shaping the valve plug to be thicker on one side of the shaft (e.g., in the wing-shaped design illustrated in FIGS. 10A and 10B) also may balance the weight of the valve plug relative to the shaft.

Although at least a portion of the foregoing disclosure focuses on a rotatable valve plug assembly having one release mechanism positioned at one end of a valve shaft, the disclosure is not limited to such an arrangement. Principles of the disclosure may be used with a rotatable valve plug assembly having multiple release mechanisms. For example, a pair of mated release mechanisms may be provided, with one release mechanism on each end of a valve shaft. Such an arrangement may result in a more even load on the valve plug and valve shaft when placed under pressure-e.g., such an arrangement may reduce a torsion applied to the valve shaft. Principles of the disclosure may be used to provide, e.g., a latch and/or energy absorber on one or both ends of the shaft (i.e., with one or both of the release mechanisms).

The foregoing embodiments are exemplary only. Other embodiments will be apparent to those skilled in the art from consideration of the specification and practice of the disclosure herein.

## Claims

1. A rotatable pressure relief valve assembly, comprising:
a valve body (1);
a plug (10) mounted within the body (1), the plug (10) being rotatable between an open position and a closed position about a rotatable shaft (20);
a release mechanism (30) configured to engage with the shaft (20) and hold the plug (10) in the closed position until an opening pressure of the valve assembly is reached; and,
a damper (60) configured to absorb a rotational kinetic energy imparted by the shaft (20) when the valve plug (1) rotates into the open position;
wherein
the release mechanism (30) comprises a failure member (31), the assembly further comprising a pre-loading mechanism (33) configured to pre-load the failure member (31);
**characterized in that**
the rotatable shaft (20) comprises a contact arm (40) configured to engage with the failure member (31), and to transmit a torque from the shaft (20) to the failure member (31); and
wherein the damper (60) is configured to absorb the rotational kinetic energy by engaging with the contact arm (40).

2. The rotatable pressure relief valve assembly of claim 1, further comprising:
a catching mechanism (50) configured to engage the shaft (20) when the valve plug (10) rotates into the open position, wherein the catching mechanism (50) is further configured to retain the plug (10) in the open position.

3. The rotatable pressure relief valve assembly of claim 2, wherein the shaft (840) comprises a notch (841); and
wherein the catching mechanism (850) is configured to engage with the notch (841) when the valve plug rotates into the open position.

4. The rotatable pressure relief valve assembly of claim 2, wherein the shaft (940) comprises at least one tooth (941); and
wherein the catching mechanism is configured to engage with the at least one tooth when the valve plug rotates into the open position.

5. The rotatable pressure relief valve assembly of any preceding claim,
wherein the plug is wing-shaped.

6. The rotatable pressure relief valve assembly of any preceding claim, wherein the shaft (20) is offset from a diameter (12) of the valve plug (10), and wherein the mass of the plug (10) is distributed evenly on either side of the offset shaft (20).

7. The rotatable pressure relief valve assembly of claim 1, further comprising:
a thermal shield (501, 502) positioned between the valve body and a heat source (510) external to the valve body (503), wherein the thermal shield (501, 502) is oriented to protect the valve body from asymmetric heating caused by the external heat source (510).

## Patentansprüche

1. Drehbare Druckentlastungsventileinheit, umfassend:
einen Ventilkörper (1);
einen Kegel (10), der in dem Körper (1) angebracht ist, wobei der Kegel (10) zwischen einer offenen Stellung und einer geschlossenen Stellung um eine drehbare Welle (20) drehbar ist;
einen Auslösemechanismus (30), der für einen Eingriff mit der Welle (20) gestaltet ist und um den Kegel (10) an der geschlossenen Stellung zu halten, bis ein Öffnungsdruck der Ventileinheit erreicht ist; und
einen Dämpfer (60), der für eine Absorption einer kinetischen Rotationsenergie gestaltet ist, die durch die Welle (20) ausgeübt wird, wenn sich der Ventilkegel (1) an die offene Stellung dreht;
wobei
der Auslösemechanismus (30) ein Versagenselement (31) umfasst, wobei die Einheit ferner einen Vorspannmechanismus (33) umfasst, der zum Vorspannen des Versagenselements (31) gestaltet ist;
**dadurch gekennzeichnet, dass**
die drehbare Welle (20) einen Kontaktarm (40) umfasst, der für einen Eingriff mit dem Versagenselement (31) gestaltet ist und um ein Drehmoment von der Welle (20) auf das Versagenselement (31) zu übertragen; und
wobei der Dämpfer (60) so gestaltet ist, dass er die kinetische Rotationsenergie durch Eingriff mit dem Kontaktarm (40) absorbiert.

2. Drehbare Druckentlastungsventileinheit nach Anspruch 1, ferner umfassend:
einen Feststellmechanismus (50), der für einen Eingriff mit der Welle (20) gestaltet ist, wenn sich der Ventilkegel (10) an die offene Stellung dreht, wobei der Feststellmechanismus (50) ferner so gestaltet ist, dass er den Kegel (10) an der offenen Stellung hält.

3. Drehbare Druckentlastungsventileinheit nach Anspruch 2, wobei die Welle (840) eine Kerbe (841) umfasst; und
wobei der Feststellmechanismus (850) für einen Eingriff mit der Kerbe (841) gestaltet ist, wenn sich der Ventilkegel an die offene Stellung dreht.

4. Drehbare Druckentlastungsventileinheit nach Anspruch 2, wobei die Welle (940) mindestens einen Zahn (941) umfasst; und
wobei der Feststellmechanismus für einen Eingriff mit dem mindestens einen Zahn gestaltet ist, wenn sich der Ventilkegel an die offene Stellung dreht.

5. Drehbare Druckentlastungsventileinheit nach einem der vorstehenden Ansprüche, wobei der Kegel flügelförmig ist.

6. Drehbare Druckentlastungsventileinheit nach einem der vorstehenden Ansprüche, wobei die Welle (20) von einem Durchmesser (12) des Ventilkegels (10) versetzt ist, und wobei die Masse des Kegels (10) auf jeder Seite der versetzten Welle (20) einheitlich verteilt ist.

7. Drehbare Druckentlastungsventileinheit nach Anspruch 1, ferner umfassend:
eine thermische Abschirmung (501, 502), die zwischen dem Ventilkörper und einer Wärmequelle (510) außerhalb des Ventilkörpers (503) positioniert ist, wobei die thermische Abschirmung (501, 502) so ausgerichtet ist, dass sie den Ventilkörper vor durch die externe Wärmequelle (510) verursachter asymmetrischer Erhitzung schützt.

## Revendications

1. Ensemble soupape de détente rotatif, comprenant :
un corps de soupape (1) ;
un opercule (10) monté à l'intérieur du corps (1), l'opercule (10) pouvant tourner entre une position ouverte et une position fermée autour d'un axe rotatif (20) ;
un mécanisme de libération (30) conçu pour venir en prise avec l'arbre (20) et maintenir l'opercule (10) dans la position fermée jusqu'à ce qu'une pression d'ouverture de l'ensemble soupape soit atteinte ; et,
un amortisseur (60) conçu pour absorber l'énergie cinétique de rotation transmise par l'arbre (20) lorsque l'opercule (1) de soupape tourne dans la position ouverte ;
le mécanisme de libération (30) comprenant un élément de défaillance (31), l'ensemble comprenant en outre un mécanisme de précharge (33) conçu pour précharger l'élément de défaillance (31) ;
**caractérisé en ce que**
l'arbre rotatif (20) comprend un bras de contact (40) conçu pour venir en prise avec l'élément de défaillance (31), et pour transmettre un couple de l'arbre (20) à l'élément de défaillance (31) ; et
l'amortisseur (60) étant conçu pour absorber l'énergie cinétique de rotation en venant en prise avec le bras de contact (40).

2. Ensemble soupape de détente rotatif selon la revendication 1, comprenant en outre :
un mécanisme d'accrochage (50) conçu pour venir en prise avec l'arbre (20) lorsque l'opercule (10) de soupape tourne dans la position ouverte, le mécanisme d'accrochage (50) étant en outre conçu pour retenir l'opercule (10) dans la position ouverte.

3. Ensemble soupape de détente rotatif selon la revendication 2, l'arbre (840) comprenant une encoche (841) ; et
le mécanisme d'accrochage (850) étant conçu pour venir en prise avec l'encoche (841) lorsque l'opercule de soupape tourne dans la position ouverte.

4. Ensemble soupape de détente rotatif selon la revendication 2, l'arbre (940) comprenant au moins une dent (941) ; et
le mécanisme d'accrochage étant conçu pour venir en prise avec l'au moins une dent lorsque l'opercule de soupape tourne dans la position ouverte.

5. Ensemble soupape de détente rotatif selon l'une quelconque des revendications précédentes, l'opercule étant en forme d'aile.

6. Ensemble soupape de détente rotatif selon l'une quelconque des revendications précédentes, l'arbre (20) étant décalé d'un diamètre (12) de l'opercule de soupape (10), et la masse de l'opercule (10) étant répartie uniformément de chaque côté de l'arbre décalé (20).

7. Ensemble soupape de détente rotatif selon la revendication 1, comprenant en outre :
un bouclier thermique (501, 502) positionné entre le corps de soupape et une source de chaleur (510) externe au corps de soupape (503), le bouclier thermique (501, 502) étant orienté pour protéger le corps de soupape contre un échauffement asymétrique causé par la source de chaleur (510) externe.
